Europäisches Patentamt

European Patent Office

Office européen des brevets

(11) Numéro de publication: **0 295 993**
A1

## (12) DEMANDE DE BREVET EUROPEEN

(21) Numéro de dépôt: **88401301.2**

(22) Date de dépôt: **27.05.88**

(51) Int. Cl.⁴: **A 23 J 1/02**
**A 23 L 1/312**

(30) Priorité: **29.05.87 FR 8707601**

(43) Date de publication de la demande:
**21.12.88 Bulletin 88/51**

(84) Etats contractants désignés:
**AT BE CH DE ES FR GB GR IT LI LU NL SE**

(71) Demandeur: **JAEGER PARTICIPATIONS S.A.**
**9 Rue du Colonel Driant**
**F-95400 Arnouville-les-Gonesse (FR)**

(72) Inventeur: **Thirode, Pierre Henri**
**80 Boulevard Bourdon**
**F-92200 Neuilly-sur-Seine (FR)**

(74) Mandataire: **Leszczynski, André et al**
**Cabinet Dupuy & Loyer 14, rue La Fayette**
**F-75009 Paris (FR)**

(54) **Produit protidique utilisable notamment en charcuterie.**

(57) Produit protidique utilisable notamment en charcuterie en tant que produit de remplacement du gras naturel de viande, caractérisé par le fait qu'il est constitué de gras naturel de viande, dégraissé par chauffage, et présentant une teneur en lipides inférieure à 70 % en poids.

EP 0 295 993 A1

Bundesdruckerei Berlin

**Description**

## PRODUIT PROTIDIQUE UTILISABLE NOTAMMENT EN CHARCUTERIE

La présente invention est relative à un nouveau produit protidique utilisable notamment en charcuterie, en particulier pour la préparation de saucissons, pâtés et saucisses, en tant que produit de remplacement du gras naturel de viande.

On utilise traditionnellement, pour la préparation de différents produits de charcuterie, du gras naturel de viande, en particulier de viande de porc.

Un tel gras naturel de viande présente une teneur élevée en lipides, généralement supérieure à 70% en poids, et de ce fait les produits de charcuterie utilisant un tel gras naturel de viande conviennent mal aux tendances de l'alimentation moderne de réduction de la consommation de lipides.

La présente invention se propose de fournir un produit protidique, utilisable à la place du gras naturel de viande, présentant sensiblement la même onctuosité et la même saveur que celui-ci et permettant de ce fait de réaliser des produits de charcuterie, en particulier des saucisses, du pâté et des saucissons ayant l'apparence et le goût des produits traditionnels tout en étant plus digestes et moins riches en calories.

Le produit protidique selon l'invention se caractérise par le fait qu'il est constitué de gras naturel de viande, dégraissé par chauffage, et présentant une teneur en lipides inférieure à 70 % en poids, en particulier de 10 à 50 % en poids et de préférence de l'ordre de 40 % en poids.

Ce produit peut ainsi comporter une teneur en protides de l'ordre de 20 %.

Le produit selon l'invention peut être obtenu en chauffant, ce qui est en soi connu, du gras naturel de viande.

Ainsi on peut obtenir le produit selon l'invention en chauffant dans une cuve du gras naturel de viande, de préférence préalablement haché par exemple dans un dispositif rotatif connu sous le nom de "cutter", à une température comprise entre 60 et 100°C, de préférence de l'ordre de 80°C et pendant un temps compris entre environ 2 et environ 20h selon le poids et la finesse de la coupe. Selon l'invention l'on recueille, par exemple à l'aide d'une passoire, le produit protidique aggloméré au-dessus d'une phase lipidique, les lipides recueillis au fond de la cuve pouvant être employés à d'autres utilisations.

De l'eau formant support de fusion peut également être introduite dans la cuve, le produit protidique recueilli au-dessus de la phase d'eau lipidique pouvant être ensuite essoré pour un meilleur affinage.

En variante on peut disposer, de manière également en soi connue, le gras natural de viande sur une grille formant égouttoir disposée à l'intérieur de la cuve, le produit protidique étant, selon l'invention, recueilli sur la grille.

Dans un exemple de mise en oeuvre pour cent kilos de gras naturel de porc chauffé à 80°C pendant 20 heures, on a recueilli 35 kilos de produit protidique présentant une teneur en lipides de 40 % en poids.

Le produit protidique selon l'invention peut être utilisé en charcuterie, de la même manière que le gras naturel de viande, également sous-forme solide, d'émulsion ou dilué sous-forme de solution, par exemple dans de la saumure pour accroître la teneur en protéines des jambons, ou comme liant dans la pâte à saucisse ou saucisson sec.

A titre d'exemple, on a réalisé des saucisses de Francfort traditionnelles en utilisant du gras naturel de viande, d'une part, et un produit protidique selon l'invention réalisé selon l'exemple ci-dessus d'autre part.

Les saucisses fabriquées présentent la composition et les teneurs en lipides et l'apport calorique reportés sur le tableau suivant :

TABLEAU I

| | Saucisse de Francfort traditionnelle | Saucisse de Francfort selon l'invention |
|---|---|---|
| Matière première | Maigre de porc présalé 43 % en poids<br><br>Gras naturel 37 % en poids<br><br>Glace 20 % en poids | Maigre de porc présalé 43 % en poids<br><br>Produit protidique 37 % en poids<br><br>Glace 20 % en poids |
| Additifs | Sel, liants, arômes | Sel, liants, arômes |
| Teneur en lipides | 29 % | 12 % |
| Apport calorique pour 100g | 320 Kcal | 200 Kcal |

On a également réalisé différents produits de charcuterie en utilisant un produit protidique selon l'invention en remplacement du gras naturel de viande. Les teneurs en lipides et les apports caloriques sont reportés sur le tableau suivant :

## TABLEAU II

|  | Charcuterie traditionnelle | | Charcuterie allégée utilisant les produits protidiques selon l'invention | |
|---|---|---|---|---|
|  | Teneur en lipides (% en poids) | Apport calorique (Kcal/100g) | Teneur en lipides (% en poids) | Apport calorique (Kcal/100g) |
| Pâté de campagne | 42 | 455 | 12,5-18,5 | 190-240 |
| Mousse de foie | 38-45 | 410-465 | 12,5-20 | 190-250 |
| Chipolata chair à saucisse | 40 | 420 | 12,5-19,5 | 180-220 |
| Saucisson à l'ail | 30 | 330 | 9-13 | 150-180 |
| Boudin blanc | 15 | 300 | 6,5-10 | 130-160 |

Les fourchettes de valeurs indiquées pour les produits de charcuterie selon l'invention correspondent à l'utilisation de produits protidiques selon différents rendements du procédé de délipidation selon l'invention. Ces valeurs minimales correspondent à des rendements de l'ordre de 30% (30 Kg de produits protidiques obtenus à partir de 100 Kg de gras naturel de porc), les valeurs maximales correspondant à des rendements de l'ordre de 40 %.

Dans tous les cas, les produits obtenus présentent une teneur en protides et une valeur calorifique très inférieure aux produits traditionnels de même composition et ce avec les mêmes qualités organoleptiques.

Le produit protidique selon l'invention peut également être utilisé comme additif dans les plats cuisinés en vue d'améliorer les qualités organoleptiques des produits obtenus.

Bien que l'invention ait été décrite en liaison avec un mode de réalisation particulier, il est bien évident qu'elle n'y est nullement limitée et qu'on peut lui apporter différentes variantes et modifications sans sortir ni de son cadre, ni de son esprit.

## Revendications

1. Produit protidique utilisable notamment en charcuterie en tant que produit de remplacement du gras naturel de viande, caractérisé par le fait qu'il est constitué de gras naturel de viande, dégraissé par chauffage, et présentant une teneur en lipides inférieure à 70 % en poids.

2. Produit protidique selon la revendication 1, caractérisé par le fait que la teneur en lipides est comprise entre 10 et 50 % en poids, de préférence de l'ordre de 40 % en poids.

3. Procédé de préparation du produit selon l'une quelconque des revendications 1 et 2, dans lequel l'on chauffe dans une cuve du gras naturel de viande à une température supérieure à environ 60°C, caractérisé par le fait que l'on recueille le produit protidique aggloméré au-dessus de la phase lipidique.

4. Procédé selon la revendication 3, caractérisé par le fait que le chauffage s'effectue à une température comprise entre environ 60 et environ 100°C, de préférence de l'ordre de 80°C.

5. Procédé selon l'une quelconque des revendications 3 et 4, dans lequel l'on met en place le gras naturel de viande sur une grille formant égouttoir disposée à l'intérieur de la cuve, caractérisé par le fait que l'on recueille le produit protidique restant sur la grille.

6. Procédé selon l'une quelconque des revendications 3 à 5, caractérisé par le fait que l'on introduit de l'eau dans la cuve.

7. Procédé selon l'une quelconque des revendications 3 à 6, caractérisé par le fait que l'on utilise du gras naturel de viande préalablement haché.

8. Procédé selon l'une quelconque des revendications 3 à 8, caractérisé par le fait que le chauffage s'effectue pendant un temps compris entre 2 et 20h.

9. Utilisation du produit protidique selon l'une quelconque des revendications 1 et 2 en tant que produit de remplacement du gras naturel de viande, notamment de viande de porc pour la préparation de produits de charcuterie à teneur en lipides et à valeur calorique réduite.

Office européen des brevets

RAPPORT DE RECHERCHE EUROPEENNE

Numero de la demande

EP 88 40 1301

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | NL-A- 195 811 (CANADA PACKERS) * Revendication 1; colonne 3, lignes 30-45; exemples I-III * --- | 1-4,7 | A 23 J 1/02 A 23 L 1/312 |
| X | NL-A-7 905 147 (J.J.M. RIJPKEMA et al.) * Revendications 1,3; exemple I * --- | 1-4,6,8 ,9 | |
| X | DE-B-2 319 640 (PROTEINA) * Revendications * --- | 1,3,6 | |
| X | FR-A- 614 626 (B. JIROTKA) * Résumé, points 1-3 * --- | 1,3,5 | |
| X | DE-C- 401 733 (J. BARTH) * Revendication 1 * ----- | 1,3,5 | |

DOMAINES TECHNIQUES RECHERCHES (Int. Cl.4)

A 23 J
A 23 L
C 11 B

Le présent rapport a été établi pour toutes les revendications

| Lieu de la recherche | Date d'achèvement de la recherche | Examinateur |
|---|---|---|
| LA HAYE | 01-09-1988 | PEETERS J.C. |

EPO FORM 1503 03.82 (P0402)